(19)

**Europäisches Patentamt**
**European Patent Office**
**Office européen des brevets**

(11) **EP 3 709 225 A1**

(12) **EUROPEAN PATENT APPLICATION**

(43) Date of publication:
**16.09.2020 Bulletin 2020/38**

(51) Int Cl.:
***G06N 3/063*** *(2006.01)*          ***G06N 3/04*** *(2006.01)*

(21) Application number: **20161315.5**

(22) Date of filing: **05.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2019  US 201916298022**

(71) Applicant: **Ceva D.S.P. Ltd.**
**4673302 Herzlia Pituach (IL)**

(72) Inventors:
• **GATOT, Yaniv**
  **7312500 Kfar Daniel (IL)**
• **SHAHAR, Moshe**
  **3491011 Haifa (IL)**

(74) Representative: **Pearl Cohen Zedek Latzer Baratz UK LLP**
**The Gridiron Building**
**One Pancras Square**
**London N1C 4AG (GB)**

(54) **SYSTEM AND METHOD FOR EFFICIENT UTILIZATION OF MULTIPLIERS IN NEURAL-NETWORK COMPUTATIONS**

(57)     A system and method for performing neural network calculations may include selecting a size in bits for representing a plurality of weight elements of the neural network based on a value of the weight elements. In each computational cycle: if the size in bits of a weight element of the plurality of weight elements is $N$, configuring an $N*K$ multiply accumulator to perform one multiply-accumulate operation of a $K$-bit data element and the $N$-bit weight element; and if the size in bits of at least two $N/M$-bit weight elements of the plurality of weight elements is $N/M$, configuring the $N*K$ multiply accumulator to perform up to $N/M$ multiply-accumulate operations, each of a $K$-bit data element and an $N/M$-bit weight element, where $N$, $K$ and $M$ are integers bigger than one, $N$ is a power of 2, $M$ is even and $N \geq M$.

Fig. 4

## Description

### FIELD OF THE INVENTION

The present invention relates generally to the field of dedicated hardware for neural network computations, and more particularly, to efficient utilization of multipliers in neural network computations.

### BACKGROUND

Artificial neural networks (referred to herein as neural networks, NN) such as deep-learning neural networks are widely used in a variety of applications such as automotive applications, autonomous drones, surveillance cameras, mobile devices, Internet of Things (IoT) devices, high-end devices with embedded neural network processing, and many more.

A neural network may refer to an information processing paradigm that may include nodes, referred to as neurons, organized into layers, with links between the neurons. The links may transfer signals between neurons and may be associated with weights. An NN may be configured or trained for a specific task, e.g., pattern recognition or classification. Training a NN for the specific task may involve adjusting these weights based on examples. Each neuron of an intermediate or last layer may receive an input signal, e.g., a weighted sum of output signals from other neurons, and may process the input signal using a linear or nonlinear function (e.g., an activation function). The results of the input and intermediate layers may be transferred to other neurons and the results of the output layer may be provided as the output of the NN Typically, the neurons and links within a NN are represented by mathematical constructs, such as activation functions and matrices of data elements and weights. A processor, e.g. CPUs or graphics processing units (GPUs), or a dedicated hardware device may perform the relevant calculations.

NN calculations require performing a huge amount of multiplications, e.g., of the data elements and weights. Typical hardware implementations of NN usually support 16-bit fixed-point precision arithmetic processing. However, the power consumption of such devices becomes a problem in many NN applications.

Attempts to reduce the power consumption have been made, for example, by reducing the bit precision to 8, 4 or even 1 bit. While reducing the bit precision may indeed reduce the power consumption, it may at the same time reduce the accuracy of the neural network.

### SUMMARY OF THE INVENTION

According to embodiments of the present invention, there is provided a system and method for efficient utilization of multipliers in neural network computations by an execution unit. The method may include for example determining a size in bits of weight elements; configuring an $N*K$ multiply accumulator to perform at least two multiply operations in parallel, if the size in bits of at least two weight elements is not bigger than $N/M$, where $K$ is an integer bigger than one, each of $N$ and $M$ is a power of 2 and $N{\geq}M$.

According to embodiments of the present invention, there is provided a neural network hardware accelerator. The neural network hardware accelerator may include: a weight packet buffer configured to store at least one weight packet; a data queue configured to store at least $M$ data elements; an $N*K$ multiplier-accumulator including: an $N*K$ multiplier; an adder; and an accumulator; wherein the neural network hardware accelerator may be configured to: determine a size in bits of weight elements in the at least one weight packet; configure the $N*K$ multiply accumulator to perform at least two multiply operations in parallel, if the size in bits of at least two of the weight elements is not bigger than $N/M$, where $N$, $K$ and $M$ are integers bigger than one, $N$ is a power of 2, $M$ is even and $N{\geq}M$.

Embodiments of the invention may include configuring the $N*K$ multiply accumulator to perform $N/M$ multiply operations in parallel, if the size in bits of $M$ weight elements is $N/M$.

Embodiments of the invention may include configuring the $N*K$ multiply accumulator to perform one multiply operation, if the size in bits of a weight element is $N$.

Embodiments of the invention may include obtaining a weight packet, the weight packet including a header indicative of the size in bits of weight elements in the weight packet, wherein the size in bits of the weight elements in the weight packet may be determined based on the header.

Embodiments of the invention may include selecting the size in bits for representing the weight elements in the weight packet based on a value of the weight elements.

According to embodiments of the invention, the weight elements pertain to a neural network.

Embodiments of the invention may include accumulating the results of the at least two multiply operations with the results of previous multiplications performed by the $N*K$ multiply accumulator.

According to some embodiments of the invention, $N = 16$, and the value of $M$ is selectable from 1, 2 and 4.

According to embodiments of the present invention, there is provided a system and method for performing neural network calculations. Embodiments of the invention may include: selecting a size in bits for representing a plurality of weight elements of the neural network based on a value of the weight elements; in each computational cycle: if the size in bits of a weight element of the plurality of weight elements is N, configuring an N*K multiply accumulator to perform one multiply-accumulate operation of a K-bit data element and the N-bit weight element; and if the size in bits of at least two N/M-bit weight elements of the plurality of weight elements is N/M, configuring the N*K multiply accumulator to perform up to N/M multiply-accumulate operations, each of a K-bit data element and an N/M-bit weight element, wherein N, K and M are integers bigger than one, N is a power of 2, M is even and N≥M.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is schematic illustration of an exemplary computational device according to embodiments of the invention;

Fig. 2 is schematic illustration of an example of a neural network accelerator according to embodiments of the invention;

Fig. 3 is a flowchart diagram illustrating a method for efficient multipliers utilization in neural networks, according to embodiments of the present invention;

Fig. 4 depicts a multiplier accumulator of neural network accelerators, according to embodiments of the present invention;

Fig. 5 depicts an example of weight packets with variable bit depth, according to embodiments of the present invention;

Fig. 6A depicts a 16x16 multiplier, configured as a single 16x16 multiplier, helpful in demonstrating embodiments of the invention; and

Fig. 6B depicts the same 16x16 multiplier depicted in Fig. 6A, configured as two 8x16 sub-multipliers, helpful in demonstrating embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

**DETAILED DESCRIPTION**

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Neural network calculations require performing a huge amount of multiplications of data elements and weight elements. Typically, data elements and weight elements in hardware implementations of neural network accelerators have a fixed length of weight elements of N bits where N is a power of 2, e.g., 4, 8 or 16 bits. Thus, the registers and the multipliers in the hardware implementation are all adapted to support a fixed, e.g., N-bit weight length for a given network layer. In some prior art implementations, less bits per weight elements are sometimes used to increase the calculation throughput. However, using less bits per weight elements may reduce the accuracy of the neural network.

According to embodiments of the invention, use statistics of real-world weight statistics from trained networks have shown that a significant number of the $N$ bit weight elements may be represented by $N/2$ or even $N/4$ bits without losing accuracy. A weight element may be represented by smaller number of bits if the value of the weight is small enough. For example, weights of eight bits may support values of 0-256. However, if the value of the weight is smaller than 16, it may be represented by four bits only. In this case the most significant bits (MSB) of an 8-bit weight element will all equal zero.

According to embodiments of the invention, in case where two $N$-bit weight elements may be represented by $N/2$ bits without losing accuracy, an $N \times K$ multiplier used for neural network multiplications may be split into two $N/2 \times K$ sub-multipliers, where $K$ is the length in bits of the data elements. Thus, a single $N \times K$ multiplier may perform two $N/2 \times K$ multiplications in each cycle, instead of a single $N \times K$ multiplication. In the general case, if $M$ (or at least two) $N$-bit weight elements may be represented by $N/M$ bits without losing accuracy an $N \times K$ multiplier may be split into $M$ $N/M \times K$ sub-multipliers, where $K$ is an integer bigger than one, $M$ is a power of 2 and $N \geq M$.

Embodiments of the invention may reduce of the size (in bits) of the weight elements in the neural network and increase the computational efficiency while maintaining the network accuracy. Reducing the size of the weight elements may reduce the bandwidth of fetches of weight elements since less bits need to be fetched. Additionally, smaller weight elements may require smaller multipliers and thus may enable better utilization of multipliers. For example, a bigger multiplier may be divided into two smaller multipliers and perform two multiplications instead of one in each computational cycle. In some cases, embodiments of the invention may enable doubling the multipliers throughput. Thus, embodiments of the invention may improve the computer and improve the technology of neural network accelerators by reducing the bandwidth of fetches of weight elements and increasing multipliers throughput. Reducing the bandwidth of fetches of weight elements and increasing multipliers throughput may reduce the hardware needed for performing NN calculations and reduce the power consumption of these calculations. Thus, embodiments of the invention may improve the operation of the computer performing the NN calculations by training an NN and using the NN for its intended task using less hardware (e.g., less number of multipliers) and consuming less power relatively to prior art computers.

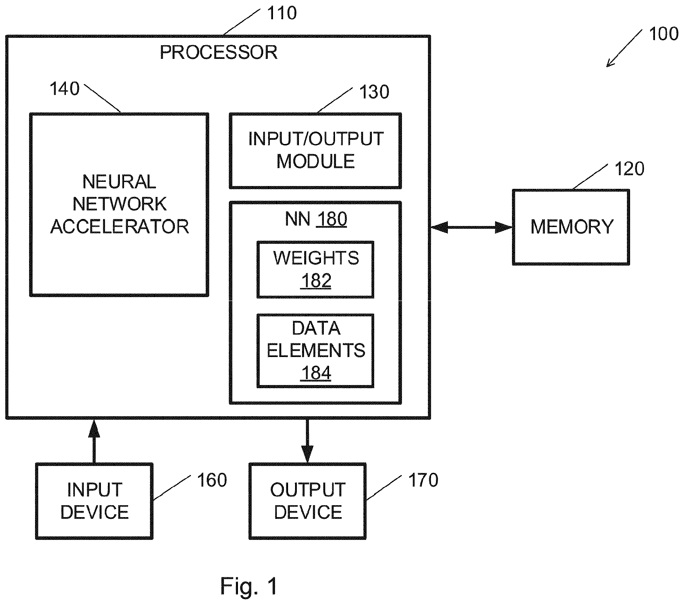

Reference is made to Fig. 1, which is a schematic illustration of an exemplary computational device 100 according to embodiments of the invention. Device 100 may include a neural network accelerator 140. The input and output module 130 may read input weights from memory 120, prepare the input data for acceleration and store output data at memory 120. Neural network accelerator 140 may obtain the input data, perform the neural network calculation as disclosed herein, and store the results (e.g., the output data) back to memory 120 using input and output module 130. Neural network accelerator 140 may be a part of a bigger processor 110 or a standalone device operated by a controller or processor.

Device 100 may include a computer device, a video or image capture or playback device, a cellular device, a cellular telephone, a smartphone, a personal digital assistant (PDA), a video game console or any other computational device. Device 100 may include any device capable of performing calculations. Device 100 may include an input device 160 such as a mouse, a keyboard, a microphone, a camera, a Universal Serial Bus (USB) port, a compact-disk (CD) reader, any type of Bluetooth input device, etc., for providing input strings and other input, and an output device 170, for example, a transmitter or a monitor, projector, screen, printer, speakers, or display, for displaying data such as video, image or audio data on a user interface according to a sequence of instructions executed by processor 110.

Device 100 may include a processor 110. Processor 110 may include or may be a vector processor, a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific processor or controller.

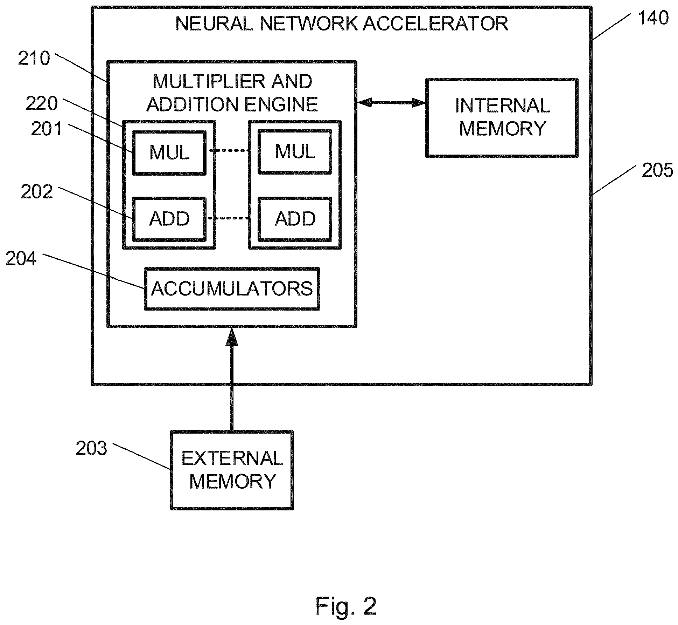

Device 100 may include a memory unit 120. While drawn external to processor 110, memory unit 120 may be or may include a memory unit directly accessible to or internal to, e.g., physically attached or stored within, processor 110 (e.g., internal memory 205 depicted in Fig. 2) and/or external to processor 110 (e.g., external memory 203 depicted in Fig. 2). Memory unit 120 may be a long-term and/or short-term memory unit. Memory unit 120 may include, for example, random access memory (RAM), dynamic RAM (DRAM), flash memory, cache memory, volatile memory, non-volatile memory or other suitable memory units or storage units. Memory unit 120 may be implemented as separate (for example, "off-chip") or integrated (for example, "on-chip") memory units. For example, memory unit 120 may be or may include a tightly-coupled memory (TCM), a buffer, or a cache, such as, an L-1 cache or an L-2 cache. Other or additional memory architectures may be used.

According to embodiments of the invention, processor 110 may be configured to execute an NN 180 for performing a specific task, e.g., pattern recognition or classification, and neural network accelerator 140 may be configured to perform multiplications for the operation of NN 180, e.g., multiplications of weight elements 182 pertaining to NN 180 and data elements 184 of NN 180. Accelerator 140 may include dedicated hardware for performing calculations related to NN 180 as disclosed herein, and may be controlled by processor 110. According to embodiments of the invention, multipliers (e.g., multipliers 201 shown in Fig. 2) of neural network accelerator 140 may be configured on the fly to perform $M$ multiplications, each of a data element 184 with $K$ bits and a weight element 182 of $N/M$ bits in each computational cycle, where *N, M* and *K* are integers and *M>=1*. Furthermore, according to embodiments of the invention, processor 110 may examine the values of weights in neural network calculations, and may configure multipliers of neural network accelerator 140 on-the-fly to perform up to *M* multiplications, each of *K*N/M* bits in each computational cycle, according to the value of weights 182.

The value of *M* may dynamically change on the fly from one computational cycle to another according to the weight value or bit depth of weight elements in each computational cycle. Thus, the number of multiplications each multiplier of neural network accelerator 140 performs may not be fixed and may dynamically change or adjusted form one computational cycle to another according to the weight elements that are used at each computational cycle. According to embodiments of the invention, calculations of a single NN may be performed with different values *of M,* or different sizes of multipliers, that are dynamically adjusted as needed at each computational cycle.

In some embodiments, neural network accelerator 140 may support *4, 8* and *16*-bit multiply accumulation operations, e.g., multiply accumulation operations with weights 182 of *4, 8* and *16* bits. Thus, if the eight MSBs of a weight 182 are larger than zero, the data element 184 (e.g., a *16*-bit data element) should be multiplied by the *16* bits of the weight element 182, and a MAC 220 (depicted in Fig. 2) of neural network accelerator 140 may be configured by processor 100 to perform a *16*-bit multiply-accumulate operation. However, if the eight MSBs of two weight elements 182 equal zero, then two data elements 184, e.g., *16*-bit data elements, should be multiplied by only eight bits of the weight element 182, e.g., the eight least significant bits (LSB) of the weight 182. Thus, a MAC 220 of neural network accelerator 140 may be configured by processor 100 to perform two *8*-bit multiply-accumulate operations in parallel at the same computational cycle, e.g., at the same clock cycles. Similarly, if the twelve MSBs of four weight elements 182 equal zero, then four data elements 184, e.g., *16*-bit each, may be multiplied by only four bits of the weight elements 182, e.g., the four least significant bits (LSB) of weight element 182. Thus, a MAC 220 of neural network accelerator 140 may be configured by processor 100 to perform four *4*-bit multiply-accumulate operations in parallel at the same computational cycle.

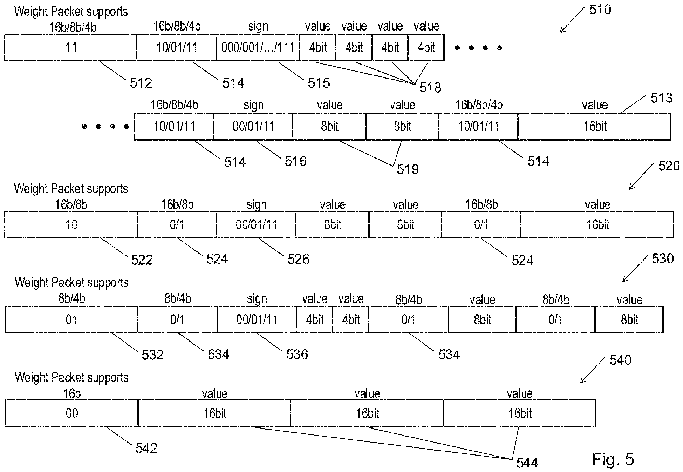

In some embodiments, processor 100 may configure MACs 220 of neural network accelerator 140 by generating weight packets (e.g., weight packets 510, 520, 530 and 540 depicted in Fig. 5). The weight packets may include the weight elements and a header indicating the bit depth of the weight elements in the weight packet which may dictate the compute size or multiplier size needed. These weight packets may be provided to neural network accelerator 140.

Reference is now made to Fig. 2 which a is schematic illustration of an example of a neural network accelerator 140 according to embodiments of the invention. Neural network accelerator 140 may include a multiply and addition engine 210 that may include a plurality of multipliers-accumulators (MACs) 220. A MAC 220 may include an *N*K* multiplier 201 and an adder 202, where *N* and *K* are the maximal size in bits of the operands multiplier 201 may multiply. MAC 220, multiplier 201 and adder 202 may include logic circuits, or electronic components. Multiplier 201 may multiply, or may be configured to multiply, one or more pairs of two operands. In some implementations, the first operand, e.g., the data item or element (e.g., data element 184) with up to (e.g. less than or equal to) *K* bits, may be read from external memory 203 and a second operand, e.g., the weight element (e.g., weight element 182) with up to *N* bits, may be read from internal memory 205. However, other architectures may be used. Adders 202 may accumulate the results by adding the result of the current multiplication or multiplications with the result of the previous multiplications that may be stored in registers or accumulators 204. The accumulated result may be stored in registers or accumulators 204.

According to embodiments of the invention, the efficiency of neural network accelerator 140 may be improved without impacting the accuracy of neural network accelerator 140 by supporting weight elements having variable number of bits (e.g., variable bit depth) instead of weight elements of a fixed bit length. The number of bits required for each weight element may depend on the value of the weight.

A total of *N* bits may include *M* weights, each with *N/M* bits . In case *M=1* the *N* bits may include a single weight element of *N* bits. Thus, each *N* bits read from for example internal memory 205 may include a single weight element of *N* bits or *M* weight elements of *N/M* bits, or a plurality of weight elements of variable bit depth as disclosed herein. Multipliers 201 may be configured to perform calculations on a variable size of bit variables with only a small increase in size of multipliers 201. Thus, in a single computational cycle (e.g., the number of clock cycles required to perform a single multiplication, for example a single clock cycle), a single multiplier 201 may multiply a single data element by a single weight element of *N* bits, or multiply up to *M* data elements by *M* weight elements in parallel, where each weight element has *N/M* bits. Thus, *M* multiplications may be performed by a single MAC 220, in each computation cycle, instead of a single multiplication.

According to some embodiments, neural network accelerator 140 may obtain weight packets (e.g., weight packets 510, 520, 530 and 540 depicted in Fig. 5) from processor 100, and may configure each MAC 220 to multiply a single data element by a single weight element of *N* bits, or multiply *M* data elements by *M* weight elements in parallel, according to the header. MACs 220 may be configured using any applicable method, e.g., dedicated control bits 206.

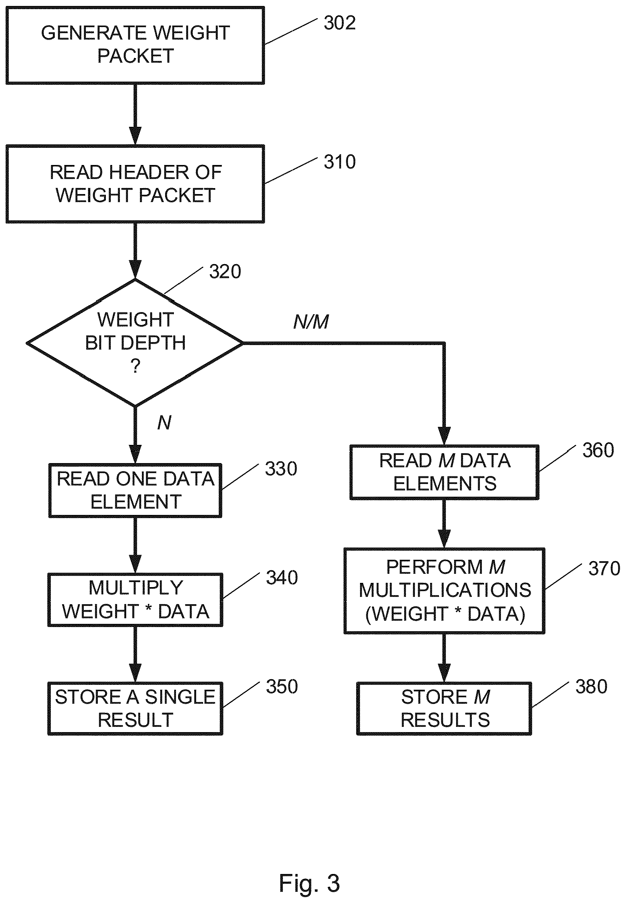

Reference is now made to Fig. 3, which is a flowchart diagram illustrating a method for efficient multipliers utilization in neural networks, according to embodiments of the present invention. According to some embodiments, a method for efficient multipliers utilization in neural networks may be performed by any suitable processor or accelerator, for example, neural network accelerator 140 depicted in Fig. 1, or other processors. According to some embodiments, a method for efficient multipliers utilization in neural networks may be used for executing calculations of neural networks of any applicable type and for any required task.

In operation 302, weight packets may be generated, e.g., by a software application during network preparation. The weight packets may include weight elements pertaining to a neural network of any applicable type, e.g., a recurrent neural network (RNN), a long short-term memory (LSTM), a convolutional neural network (CNN), etc. For example, the software application may determine or select how many bits are required to represent each weight based on the value of the weight, and may generate weight packets accordingly. For example, the software application may determine or select the smallest number of bits, out of the supported bit sizes, required for representing any given weight value or group of weight values. The software application may add or prepend one or more headers or suffixes (e.g. data located next to the weights at the same weight packet), indicative of the size or bit depth of each weight element in the weight packet and sign bits as disclosed herein.

As known, the number of bits required to represent a value depends on the value. Typically, weight elements may be represented by four bits, eight bits or sixteen bits, however, other sizes may be used. A weight element may be represented by a smaller number of bits than the maximal defined weight size, if the value of the weight is small enough. For example, weights of sixteen bits may support $2^{16}$ different values, for example *-32,768 (-1 $\times$ $2^{15}$)* through *32, 767 ($2^{15}$ - 1)* for signed integers, or *0* through *65,535 ($2^{16}$ - 1)* for unsigned integers. Weights of eight bits may support $2^8$ different values, for example *-128 (-1 $\times$ $2^7$)* through *127 ($2^7$ - 1)* for signed integers, or *0* through *255 ($2^8$ - 1)* for unsigned integers. Weights of four bits may support $2^4$ different values, for example *-8 (-1 $\times$ $2^3$)* through *7 ($2^3$ - 1)* for signed integers, or *0* through *15 ($2^4$ - 1)* for unsigned integers. For example, if the value of the weight is smaller than *16,* it may be represented by four bits only. In this case the *12* most significant bits (MSB) of a 16-bit weight would all equal zero.

In some embodiments, the software application may determine or select the smallest number of bits, out of the supported bit sizes, required for representing a given value. For example, if unsigned integers are used and *4*-bits, *8*-bits and *16*-bits are supported, the software application may determine or select to represent a weight using *4* bits for values of *0* through *15,* using *8* bits for values of *16* through *255,* or *16* bits for values of *256* through *65,535.* If signed integers are used with the same number of bits, the software application may determine or select to represent a weight using *4* bits for values of *-8* through *7,* using *8* bits for values of *-128* through *-9* and *8* through *127,* or *16* bits for values of *-32,768* through *-129* and *128* through *32,767.* In some embodiments a combination of signed and unsigned representations may be used, for example, *4*-bit and *8*-bit weights may be unsigned and *16*-bit weights may be unsigned. In some embodiments sign bits (e.g., one or more bits that indicate whether the integer number is positive or negative) may be added. For example, if a sign bit is added to a *4*-bit weight, the *4*-bit weight may represent values of *-15* through *15,* and if a sign bit is added to an *8*-bit weight, the *8*-bit weight may represent values of *-255* through *255.*

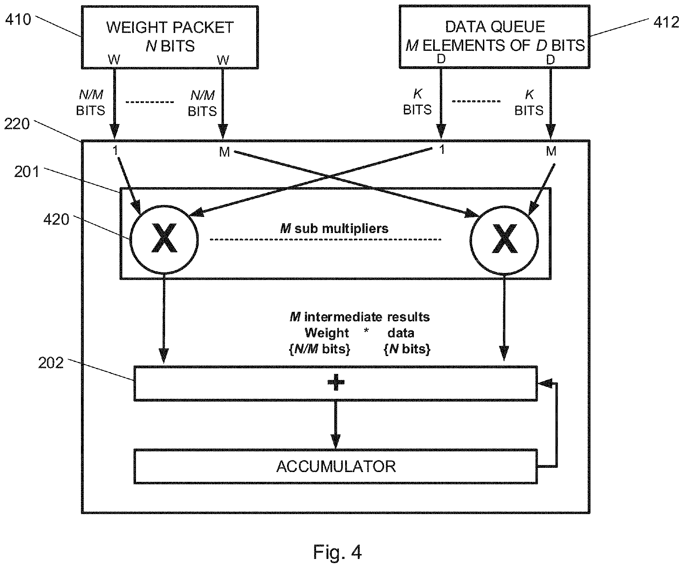

In operation 310 a weight packet may be obtained or read, e.g., from internal memory 205 by neural network accelerator 140. The weight elements may be stored in weight packets in a weight packet buffer (e.g., weight packet buffer 410 depicted in Fig. 4). A weight packet may include payload (e.g., bits containing actual weight elements), one or more headers indicating the size or bit depth of each weight element in the weight packet and sign bits as disclosed herein. The payload of the weight packet may include a plurality of weight elements, of which the largest one is *N* bits.

In operation 320 the size, in bits (e.g., bit depth) of the weight elements in the weight packet may be determined, for example, based on the header of the weight packet. If the weight packet includes a weight element with *N* bits, then in operation 330 a single data element may be read, e.g., form memory 120 or from the weight packet, and in operation 340 a single multiplication of a weight element and a data element may be performed by a single *N*K* MAC, e.g., by MAC 220, where *N* and *K* are integers bigger or greater than one, and *N* is the size in bits of the weight element and *K* is the size in bits of the data element.

If the size in bits of at least two weight elements, e.g., read from a weight packet, is not bigger than *N/M* or if the weight packet contains a plurality of weight elements with *N/M* bits, then in operation 360 up to (e.g. less than or equal to) *M* data elements may be read and in operation 370 the same MAC may be configured to perform at least two multiply operations in parallel. For example, the MAC may perform up to *M* multiplications of up to *M* weight elements and up to *M* data elements. In operation 350 the results of the single multiplication may be accumulated, e.g., summed with the results of previous multiplications and stored. In operation 380 the results of each of the up to *M* multiplication may be accumulated. In some embodiments the results of the up to *M* multiplication may me accumulated with the results of previous multiplications.

Reference is now made to Fig. 4 which shows an example of implementation of multiplier accumulator 220 of neural network accelerators, according to embodiments of the invention. Multiplier and adder block 220 may accept two inputs. The first input may be the weight elements that may be fed from weight packet buffer 410. Weight packet buffer 410 may hold or store weight elements of *N* bits or weight elements of *N/M* bits, or other combinations of weights with different bit depth as disclosed herein. The second input to multiplier and adder block 220 may be the data elements, e.g., each with *K* bits, that may be fed from a data queue 412. Data queue 412 may hold or store at least *M* data elements of size *K* bits, or other size, as may be required by the application. In each computational cycle, *M* data elements from data queue 412 may be fed to multiplier and adder block 220. In some embodiments, multiplier and adder block 220 may perform the following calculation (other calculations may be performed):

$$RESULT = RESULT + \sum_{i=1}^{i=M} W_i * D_i$$

Where $W_i$ are weight elements, and $D_i$ are data elements, and the multiplications may be performed in parallel.

Thus, if $M>1$, multiplier 201 may be divided into $M$ sub-multipliers 420 that may each multiply a single $N/M$-bits weight element by a single data element. In some embodiments, accumulator 202 may accumulate the results of the $M$ multiplications. In some embodiments, accumulator 202 may accumulate the results of the $M$ multiplications with the results of previous multiplications.

Reference is now made to Fig. 5 which depicts examples of weight packets 510, 520, 530, 540 with variable bit depth, according to embodiments of the present invention. According to some embodiments, weight packets 510, 520, 530, 540 may be generated by a software application executed by processor 100, e.g., during network preparation. For example, the software application may determine how many bits are required to represent each weight based on the value of the weight, and may generate weight packets accordingly. According to embodiments of the invention, each of weight packets 510, 520, 530, 540 may include a header field 512, 522, 532, 542, respectively, that may define the possible combinations of bit depths (e.g., length of weight elements in bits) in the weight packet 510, 520, 530, 540. In the example given in Fig. 5, a header field value of '11' (binary), as in header 512, may indicate that weight elements in weight packet 510 may be either 4-bit, 8-bit or 16- bit long, a header field value of '10' (binary), as in header 522, may indicate that weight elements in weight packet 520 may be either 8-bit or 16-bit long, a header field value of '01' (binary), as in header 532, may indicate that weight elements in weight packet 530 may be either 4-bit or 8-bit long, and a header field value of '00' (binary), as in header 542, may indicate that weight elements in weight packet 540 may be 16-bit long only. Other header values and combinations may be used. For example, the header may include more than two bits and support more options such as a weight packet with 8-bit weights only or a weight packet with 4-bit weights only.

In case the weight packet includes a single weight size or bit depth, as in weight packet 540, a plurality of weights at the specified bit depth may follow the header. For example, in weight packet 540 four weight elements 544, 16-bit each, follow header 542. In case the packet may include more than one weight size or bit depth, for example, as in weight packet 510, other headers 514 may be used to indicate the bit depth in the weight packet, according to any desirable format. Sign field 516 may be added for indicating a sign of the following weight elements.

For example, in weight packet 510, header 512 equals "11", which in the present example indicates that weight packet 510 may include 16-bit, 8-bit and 4-bit weight elements. For each of the following 16-bits of the payload of weight packet 510 a dedicated header may indicate whether the following weight elements include one 16-bit element, two 8-bit elements or four 4-bit elements. Sign fields 516 may be added for each weight element or group of weight elements. In this example, sign field 515 associated with four 4-bit weight elements 518 includes three sign bits, for supporting two signs (plus and minus) for each weight element 518. Sign field 516 associated with two 8-bit weight elements 519 includes two sign bits, for supporting two signs (plus and minus) for each weight element 519. In this example, 16-bit weight element 513 does not include any sign bit.

In weight packet 520, header 522 equals "10", which in the present example indicates that weight packet 520 may include 16-bit and 8-bit weight elements. For each of the following 16-bits of the payload of weight packet 520 a dedicated header 534 may indicate whether the following weight elements include one 16-bit weight element or two 8-bit weight elements. Sign field 526 may be added for 8-bit weight elements.

Weight packet 530 may support only 8-bit and 4-bit weight elements. This weight packet may fit applications with, for example, 8x$K$ multipliers that may be split into two 4x$K$ sub-multipliers, where $K$ is the bit depth of the data elements. The header 532 in weight packet 530 may equal "10", which in the present example indicates that weight packet 530 may include 8-bit and 4-bit weight elements. For each of the following 8-bits of the payload of weight packet 530 a dedicated header 534 may indicate whether the following weight elements include one 8-bit weight element or two 4-bit weight elements. In this example, sign field 536 may be added for the 4-bit weight elements.

Weight packet 540 may support only 16-bit weight elements. The header 542 In weight packet 540 may equal "00", which in the present example indicates that weight packet 540 may include 16-bit weight elements. Header 542 may be followed by three 16-bit weight elements. No sign fields are used in this example.

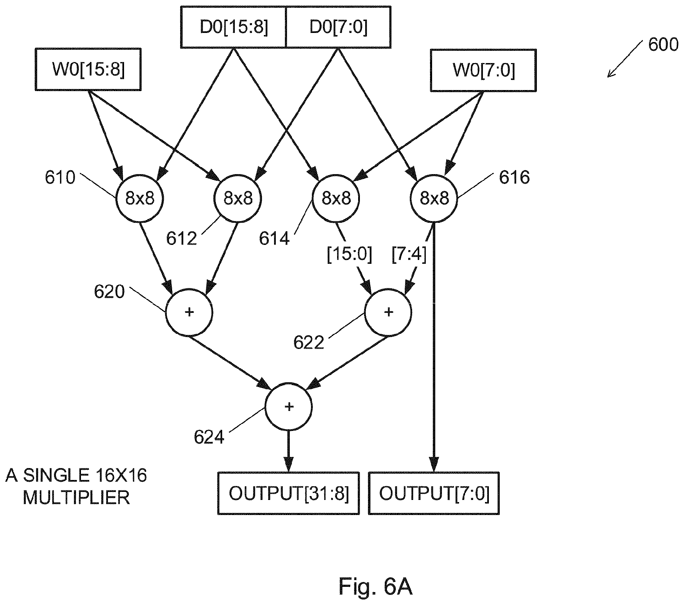

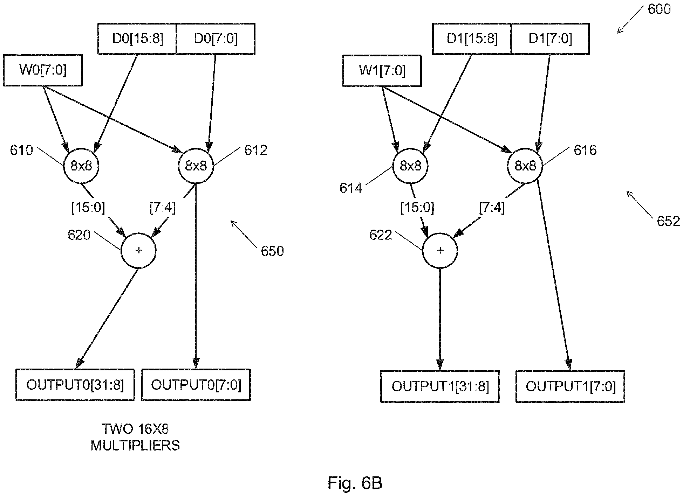

Reference is now made to Figs. 6A and 6B which depict a 16x16 multiplier 600, configured as a single 16x16 multiplier in Fig. 6A and as two 8x16 sub-multipliers in Fig. 6B, helpful in demonstrating embodiments of the invention. Multiplier 600 may be an example for multiplier 201 and sub-multipliers 650 and 652 may be an example for sub-multipliers 420, however, other configurations of multipliers may be used. Multiplier 600 may be configured as a single 16x16 multiplier as in Fig. 6A, as two 8x16 sub-multipliers as in Fig. 6B or as four 4x16 sub-multipliers (not-shown), by a processor or controller, e.g., processor 100. In the example of Fig. 6A and 6B, multiplier 600 includes four 8x8 multipliers 610, 612, 614, 616 (as known, each 8x8 multiplier may be implemented using four 4x4 multipliers), and three adders 620, 622 and 624 (only two are used in Fig. 6B).

In Fig. 6A, multiplier 600 may be configured as a single multiplier that may multiply a 16-bit weight element (denoted W0) by a 16-bit data element (denoted D0). Multiplier 610 is configured to multiply bits [15-8] of the 16-bit weight element (denoted W0[15-8] in Fig. 6A) by bits [15-8] of the 16-bit data element (denoted D0[15-8] in Fig. 6A). Multiplier 612 is configured to multiply bits [15-8] of the 16-bit weight element by bits [7-0] of the 16-bit data element (denoted D0[7-0] in Fig. 6A). Multiplier 614 is configured to multiply bits [7-0] of the 16-bit weight element (denoted W0[7-0] in Fig. 6A) by bits [15-8] of the 16-bit data element. Multiplier 616 is configured to multiply bits [7-0] of the 16-bit weight element by bits [7-0] of the 16-bit data element. Adder 620 is configured to add the results of multipliers 610 and 612, and adder 622 is configured to add the results of multiplier 614 and bits [7:4] of the results of multiplier 616. The results of multiplier 616 provide bits [7:0] of the output element (denoted OUTPUT[7-0] in Fig. 6A). Adder 624 is configured to add the results of adder 620 and adder 622 and to provide bits [31:8] of the output element (denoted OUTPUT[31-8] in Fig. 6A).

In Fig. 6B, multiplier 600 may be configured as two sub-multipliers 650 and 652. Thus, the same multipliers 610, 612, 614 and 616 may be configured to multiply a first 8-bit weight element (denoted W0) by a first 16-bit data element (denoted D0), and a second 8-bit weight element (denoted W1) by a second 16-bit data element (denoted D1). Thus, multiplier 600 may be configured to perform two multiplications in parallel. Sub-multiplier 650 may include multipliers 610 and 612 and adder 620. Sub-multiplier 652 may include multipliers 614 and 616 and adder 622.

In sub-multiplier 650, multiplier 610 is configured to multiply bits [7-0] of the first 8-bit weight element (denoted W0[7-0] in Fig. 6B) by bits [15-8] of the first 16-bit data element (denoted D0[15-8] in Fig. 6B). Multiplier 612 is configured to multiply bits [7-0] of the first 8-bit weight element by bits [7-0] of the first 16-bit data element (denoted D0[7-0] in Fig. 6B), and to provide bits [7:0] of the first output element (denoted OUTPUT0[7-0] in Fig. 6B). Adder 620 is configured to add the results of multipliers 610 and 612, and to provide bits [31:8] of the first output element (denoted OUTPUT0[31-8] in Fig. 6B).

In sub-multiplier 652, multiplier 614 is configured to multiply bits [7-0] of the second 8-bit weight element (denoted W1[7-0] in Fig. 6B) by bits [15-8] of the second 16-bit data element (denoted D1[15-8] in Fig. 6B). Multiplier 616 is configured to multiply bits [7-0] of the second 8-bit weight element by bits [7-0] of the second 16-bit data element (denoted D1[7-0] in Fig. 6B), and to provide bits [7:0] of the second output element (denoted OUTPUT1[7-0] in Fig. 6B). Adder 622 is configured to add the results of multipliers 614 and 614, and to provide bits [31:8] of the second output element (denoted OUTPUT1[31-8] in Fig. 6B).

Embodiments of the invention may be implemented for example on an integrated circuit (IC), for example, by constructing neural network accelerator 140 and processor 110, as well as other components of Figs. 1 and 2 in an integrated chip or as a part of a chip, such as an ASIC, an FPGA, a CPU, a DSP, a microprocessor, a controller, a chip, a microchip, etc.

According to embodiments of the present invention, some units e.g., neural network accelerator 140 and processor 110, as well as the other components of Figs. 1 and 2, may be implemented in a hardware description language (HDL) design, written in Very High-Speed Integrated Circuit (VHSIC) hardware description language (VHDL), Verilog HDL, or any other hardware description language. The HDL design may be synthesized using any synthesis engine such as SYNOPSYS® Design Compiler 2000.05 (DC00), BUILDGATES® synthesis tool available from, inter alia, Cadence Design Systems, Inc. An ASIC or other integrated circuit may be fabricated using the HDL design. The HDL design may be synthesized into a logic level representation, and then reduced to a physical device using compilation, layout and fabrication techniques, as known in the art.

Embodiments of the present invention may include a computer program application stored in non-volatile memory, non-transitory storage medium, or computer-readable storage medium (e.g., hard drive, flash memory, CD ROM, magnetic media, etc.), storing instructions that when executed by a processor (e.g., processor 110) configure the processor or cause the processor to carry out embodiments of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

The description also includes the subject matter of the following clauses 1 to 18:

**CLAUSES**

1. A method for performing multiplications in a computer system, the method comprising:

determining a size in bits of weight elements;

configuring an $N*K$ multiply accumulator to perform at least two multiply operations in parallel, if the size in bits of at least two weight elements is not bigger than $N/M$, where $K$ is an integer bigger than one, each of $N$ and $M$ is a power of 2 and $N{\geq}M$.

2. The method of clause 1, comprising:

configuring the $N*K$ multiply accumulator to perform $N/M$ multiply operations in parallel, if the size in bits of $M$ weight elements is $N/M$.

3. The method of clause 1, comprising:

configuring the $N*K$ multiply accumulator to perform one multiply operation, if the size in bits of a weight element is $N$.

4. The method of clause 1, comprising:

obtaining a weight packet, the weight packet including a header indicative of the size in bits of weight elements in the weight packet, wherein the size in bits of the weight elements in the weight packet is determined based on the header.

5. The method of clause 4, comprising selecting the size in bits for representing the weight elements in the weight packet based on a value of the weight elements.

6. The method of clause 1, wherein the weight elements pertain to a neural network.

7. The method of clause 1, comprising accumulating the results of the at least two multiply operations with the results of previous multiplications performed by the $N*K$ multiply accumulator.

8. The method of clause 7, wherein $N = 16,$ and the value of $M$ is selectable from 1, 2 and 4.

9. A method for performing neural network calculations, the method comprising:

selecting a size in bits for representing a plurality of weight elements of the neural network based on a value of the weight elements;

in each computational cycle:

if the size in bits of a weight element of the plurality of weight elements is $N,$ configuring an $N*K$ multiply accumulator to perform one multiply-accumulate operation of a $K$-bit data element and the $N$-bit weight element; and

if the size in bits of at least two $N/M$-bit weight elements of the plurality of weight elements is $N/M,$ configuring the $N*K$ multiply accumulator to perform up to $N/M$ multiply-accumulate operations, each of a $K$-bit data element and an $N/M$-bit weight element,

wherein $N,$ $K$ and $M$ are integers bigger than one, $N$ is a power of 2, $M$ is even and $N{\geq}M$.

10. The method of clause 09, wherein $N = 16,$ and the value of $M$ is selectable from 2 and 4.

11. A neural network hardware accelerator comprising:

a weight packet buffer configured to store at least one weight packet;

a data queue configured to store at least $M$ data elements;

an $N*K$ multiplier-accumulator comprising:

an $N*K$ multiplier;

an adder; and

an accumulator;

wherein the neural network hardware accelerator is configured to:

determine a size in bits of weight elements in the at least one weight packet;

configure the $N*K$ multiply accumulator to perform at least two multiply operations in parallel, if the size in bits of at least two of the weight elements is not bigger than $N/M$, where $N$, $K$ and $M$ are integers bigger than one, $N$ is a power of 2, $M$ is even and $N \geq M$.

12. The neural network hardware accelerator of clause 11, wherein the neural network hardware accelerator is configured to:
configure the $N*K$ multiply accumulator to perform $N/M$ multiply operations in parallel, if the size in bits of $M$ weight elements is $N/M$.

13. The neural network hardware accelerator of clause 11, wherein the neural network hardware accelerator is configured to:
configure the $N*K$ multiply accumulator to perform one multiply operation, if the size in bits of a weight elements is $N$.

14. The neural network hardware accelerator of clause 11, wherein the neural network hardware accelerator is configured to:
obtain a weight packet, the weight packet including a header indicative of the size in bits of weight elements in the weight packet, wherein the size in bits of the weight elements in the weight packet is determined based on the header.

15. The neural network hardware accelerator of clause 14, wherein the neural network hardware accelerator is configured to select the size in bits for representing the weight elements in the weight packet based on a value of the weight elements.

16. The neural network hardware accelerator of clause 11, wherein the weight elements pertain to a neural network.

17. The neural network hardware accelerator of clause 11, wherein the neural network hardware accelerator is configured to accumulate the results of the at least two multiply operations with the results of previous multiplications performed by the $N*K$ multiply accumulator.

18. The neural network hardware accelerator of clause 11, wherein $N = 16$, and the value *of $M$* is selectable from 1, 2 and 4.

## Claims

1. A method for performing neural network calculations, the method comprising:

   selecting a size in bits for representing a plurality of weight elements;
   in each computational cycle:
   configuring an $N*K$ multiply accumulator to perform at least two multiply operations in parallel, if the size in bits of at least two of the weight elements is not bigger than $N/M$, wherein $N$, $K$ and $M$ are integers bigger than one, $N$ is a power of 2, $M$ is even and $N \geq M$.

2. The method of claim 1 comprising, if the size in bits of a weight element of the plurality of weight elements is $N$, configuring the $N*K$ multiply accumulator to perform one multiply-accumulate operation of a $K$-bit data element and the $N$-bit weight element.

3. The method of any of the preceding claims, comprising, if the size in bits of at least two $N/M$-bit weight elements of the plurality of weight elements is $N/M$, configuring the $N*K$ multiply accumulator to perform up to $N/M$ multiply-accumulate operations, each of a $K$-bit data element and an $N/M$-bit weight element,

4. The method of any of the preceding claims, comprising obtaining a weight packet, the weight packet including a header indicative of the size in bits of weight elements in the weight packet, wherein the size in bits of the weight elements in the weight packet is determined based on the header.

5. The method of any of the preceding claims, comprising accumulating the results of the at least two multiply operations with the results of previous multiplications.

6. The method of any of the preceding claims, wherein $N = 16$, and the value of $M$ is selectable from *2* and *4*.

7. The method of any of the preceding claims, wherein the weight elements pertain to a neural network.

8. A neural network hardware accelerator comprising:

   a weight packet buffer configured to store at least one weight packet;
   a data queue configured to store at least $M$ data elements;
   an $N*K$ multiplier-accumulator comprising:

      an $N*K$ multiplier;
      an adder; and
      an accumulator;

   wherein the neural network hardware accelerator is configured to:

      determine a size in bits of weight elements in the at least one weight packet;
      configure the $N*K$ multiply accumulator to perform at least two multiply operations in parallel, if the size in bits of at least two of the weight elements is not bigger than $N/M$, wherein $N$, $K$ and $M$ are integers bigger than one, $N$ is a power of 2, $M$ is even and $N \geq M$.

9. The neural network hardware accelerator of claim 8, wherein the neural network hardware accelerator is configured to: configure the $N*K$ multiply accumulator to perform $N/M$ multiply operations in parallel, if the size in bits of $M$ weight elements is $N/M$.

10. The neural network hardware accelerator of any of claims 8-9, wherein the neural network hardware accelerator is configured to: configure the $N*K$ multiply accumulator to perform one multiply operation, if the size in bits of a weight elements is $N$.

11. The neural network hardware accelerator of any of claims 8-10, wherein the neural network hardware accelerator is configured to: obtain a weight packet, the weight packet including a header indicative of the size in bits of weight elements in the weight packet, wherein the size in bits of the weight elements in the weight packet is determined based on the header.

12. The neural network hardware accelerator of any of claims 8-9, wherein the neural network hardware accelerator is configured to select the size in bits for representing the weight elements in the weight packet based on a value of the weight elements.

13. The neural network hardware accelerator of any of claims 8-12, wherein the weight elements pertain to a neural network.

14. The neural network hardware accelerator of any of claims 8-13, wherein the neural network hardware accelerator is configured to accumulate the results of the at least two multiply operations with the results of previous multiplications performed by the $N*K$ multiply accumulator.

15. The neural network hardware accelerator of any of claims 8-14, wherein $N = 16$, and the value of $M$ is selectable from 1, 2 and 4.

Fig. 1

Fig. 2

GENERATE WEIGHT PACKET — 302

READ HEADER OF WEIGHT PACKET — 310

WEIGHT BIT DEPTH ? — 320

*N/M*

*N*

READ ONE DATA ELEMENT — 330

MULTIPLY WEIGHT * DATA — 340

STORE A SINGLE RESULT — 350

READ *M* DATA ELEMENTS — 360

PERFORM *M* MULTIPLICATIONS (WEIGHT * DATA) — 370

STORE *M* RESULTS — 380

Fig. 3

Fig. 4

Fig. 5

Fig. 6A

TWO 16X8
MULTIPLIERS

Fig. 6B

Europäisches
Patentamt

European
Patent Office

Office européen
des brevets

**EUROPEAN SEARCH REPORT**

Application Number

EP 20 16 1315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/235026 A1 (SIMON MOSHE B [US] ET AL) 20 October 2005 (2005-10-20) <br> * abstract * <br> * paragraph [0001] - paragraph [0046] * <br> * figures 1-4 * <br> ----- | 1-15 | INV. <br> G06N3/063 <br><br> ADD. <br> G06N3/04 |

TECHNICAL FIELDS
SEARCHED      (IPC)

G06N

The present search report has been drawn up for all claims

| Place of search | Date of completion of the search | Examiner |
|---|---|---|
| The Hague | 2 July 2020 | Appeltant, Lennert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.
EP 20 16 1315

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2020

| Patent document cited in search report | Publication date | Patent family member(s) | Publication date |
|---|---|---|---|
| US 2005235026 A1 | 20-10-2005 | US 2005027773 A1<br>US 2005027901 A1<br>US 2005027969 A1<br>US 2005235026 A1<br>WO 2005013084 A2 | 03-02-2005<br>03-02-2005<br>03-02-2005<br>20-10-2005<br>10-02-2005 |

EPO FORM P0459

For more details about this annex : see Official Journal of the European Patent Office, No. 12/82